# EUROPEAN PATENT APPLICATION

(11) **EP 4 773 386 A1**
(43) Date of publication of application: **08.07.2026**
(21) Application number: 24934703.0
(22) Date of filing: 31.07.2024
(51) Int. Cl.: H01M 50/342

(54) **BATTERY HOUSING, BATTERY, AND BATTERY PACK**

(30) Priority: 08.04.2024 CN 202420713967 U
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: ZHONG, Hao, Huizhou, Guangdong 516039 (CN); YANG, Chunming, Huizhou, Guangdong 516039 (CN); KU, Zhixin, Huizhou, Guangdong 516039 (CN); HU, Zhihai, Huizhou, Guangdong 516039 (CN); DUAN, Dong, Huizhou, Guangdong 516039 (CN)
(74) Representative: Zhu, Puxing
(86) International application number: PCT/CN2024/109002
(87) International publication number: WO 2025/213637

(57) **Abstract**

The present application provides a battery case, a battery, and a battery pack. The battery case includes a bottom plate and an enclosure plate, the enclosure plate and the bottom plate together define a receiving chamber with an opening, and the opening is disposed opposite to the bottom plate. The bottom plate has a center point and an explosion-proof score, the explosion-proof score has an inner edge closest to the center point and an outer edge farthest from the center point. A distance between the inner edge and the center point is greater than or equal to 1/2 of a radius of the bottom plate, and a distance between the outer edge and the center point is less than or equal to 4/5 of the radius of the bottom plate.

## Description

This application claims priority to Chinese Patent Application No. 202420713967.3 filed with the Chinese Patent Office on April 08, 2024. The disclosure of the aforementioned application is hereby incorporated by reference in its entirety.

### TECHNICAL FIELD

The present application relates to the technical field of batteries, and more particularly, to a battery case, a battery, and a battery pack.

### BACKGROUND

In case that a battery is in a state of high temperature, overcharge, or short circuit, a large amount of gas is generated inside the battery, thereby causing a sharp increase in a pressure in a battery case. To prevent an explosion of the battery, an explosion-proof score is usually provided on the battery case for pressure relief and gas emission through a rupture of the explosion-proof score.

### SUMMARY

However, it is often necessary for a battery case to mount a core and to perform a strength and safety test or the like after an explosion-proof score is provided. In related arts, these usually tend a rupture to the explosion-proof score in advance. For example, it needs to weld an area near a center of the battery case to mount the core, and heat generated in welding process can easily affect a strength of a material therearound, which causes the explosion-proof score to be ruptured in advance without an internal pressure reaching a preset value. For another example, during the strength and safety test in subsequence, a battery needs to be dropped from a higher position, which also causes the explosion-proof score to be broken and not be used continuously after dropping the battery case.

According to a first aspect, embodiments of the present application provide a battery case including a bottom plate and an enclosure plate disposed around the bottom plate. The enclosure plate and the bottom plate together define a receiving chamber having an opening, and the opening is disposed opposite to the bottom plate. The bottom plate has a center point and an explosion-proof score. The explosion-proof score has an inner edge closest to the center point and an outer edge farthest from the center point. A distance between the inner edge and the center point is greater than or equal to 1/2 of a radius of the bottom plate, and a distance between the outer edge and the center point is less than or equal to 4/5 of the radius of the bottom plate.

In a second aspect, embodiments of the present application provide a battery including the battery case of the first aspect.

In a third aspect, embodiments of the present application provide a battery pack including the battery of the second aspect.

### BENEFICIAL EFFECT

According to the battery case provided in the embodiments of the present application, an explosion-proof score is provided at a position of at least 1/2 of a radius from a center point, thus, it is possible to avoid a problem that the explosion-proof score is too close to a center point to cause heat generated by welding a bottom plate during a welding process to affect a strength of a material at a position provided with the explosion-proof score, and further to lead the explosion-proof score to be easily ruptured in advance. In addition, the explosion-proof score is provided in an area from the center point of 4/5 of the radius, thus, it avoids the problem that the explosion-proof score is ruptured due to a large collision on edges of the bottom plate during a strength and safety test to a battery in subsequence. Therefore, the battery case provided in the present application can ensure stability of the explosion-proof score, and further ensure stability of the battery in use.

### BRIEF DESCRIPTION OF THE DRAWINGS

FIG. 1 is a schematic perspective diagram of a battery case according to some embodiments of the present application in a first perspective view;
FIG. 2 is a schematic perspective diagram of a battery case according to some embodiments of the present application in a second perspective view;
FIG. 3 is a schematic structural diagram of a bottom plate according to some embodiments of the present application;
FIG. 4A is a schematic structural diagram of a bottom plate according to another embodiment of the present application;
FIG. 4B is a schematic structural diagram of a bottom plate according to yet another embodiment of the present application;
FIG. 5 is a cross-sectional structural diagram of a battery case according to some embodiments of the present application; and
FIG. 6 is an enlarged structural diagram of region F in FIG. 5.

### Reference Numerals:

10. bottom plate; 20. enclosure plate; 100. battery case; 101. inner edge; 102. outer edge; 111. explosion-proof score; 201. opening; 1001. inner sub-edge; 1002, outer sub-edge; and 1110. explosion-proof sub-score.

### DETAILED DESCRIPTION OF THE EMBODIMENTS

In the description of the present application, unless otherwise expressly defined and defined, the terms "link", "connect", "fix" are to be understood in a broad sense, for example, as a fixed connection, as a detachable connection, or as a whole; may be as a mechanical connection or an electrical connection; may be as a directly connection or indirectly connection by means of an intermediate medium; may be as internal communication of the two elements or interaction of the two elements. The specific meaning of the above terms in the present application may be understood by one of the ordinary skill in the art as the case may be.

In the description, unless otherwise expressly defined and defined, that the first feature is "on" or "under" the second feature includes that the first feature may direct contact the second feature, as well as that the first feature indirect contact the second feature by an additional feature therebetween. Moreover, that the first feature is "over", "above" or "on" the second feature includes that the first feature directly above and obliquely above the second feature, as well as that the first feature is higher than the second feature. That the first feature is "down", "below" or "under" the second feature includes that the first feature directly below and obliquely above the second feature, as well as that the first feature is lower than the second feature.

In the description of the embodiments, the orientation or the positional relationship with the terms " up", " down", "left ", " right ", " front ", " rear ", is based on the orientation or the positional relationship in the drawings. The terms are used for description and brief, rather than indicating or implying the device or the element referred to has a special orientation, or configured and operated in a special orientation. Thus, these terms should not be understood as limitations on the present application. Furthermore, the terms "first" and "second" are used to distinguish between descriptions and have no particular meaning.

It is often necessary for a battery case to mount a core and to perform a strength and safety test or the like after an explosion-proof score is provided.

In related arts, it needs to weld an area near a center of the battery case to mount the core, and heat generated in welding process can easily affect a strength of a material therearound, which causes the explosion-proof score to be ruptured in advance without an internal pressure reaching a preset value. Furthermore, during the strength and safety test in subsequence, the battery needs to be dropped from a higher position, which also causes the explosion-proof score to be broken and not be used continuously after dropping the battery case.

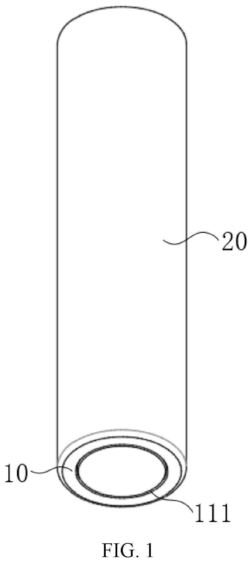

Based on the above, embodiments of the present application provide a battery case. As shown in FIG. 1, the battery case 100 includes a bottom plate 10, and an enclosure plate 20 disposed around the bottom plate 10.

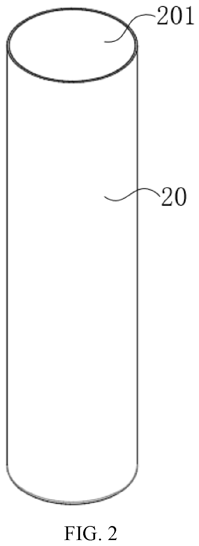

As shown in FIG. 1 and FIG. 2, the enclosure plate 20 and the bottom plate 10 together define a receiving chamber having an opening 201, and the opening 201 is disposed opposite to the bottom plate 10. After surrounding the bottom plate 10, an inner surface of the enclosure plate 20 encloses a chamber having an opening at both ends, and the bottom plate 10 closes the opening at one end of the chamber. Therefore, the inner surface of the enclosure plate 20 and a surface of the bottom plate 10 close to the enclosure plate 20 together define the receiving chamber with the opening 201 as mentioned above. The receiving chamber can receive the core, and the battery case 100 can provide good protection to the core, thereby ensuring stable operation of the core.

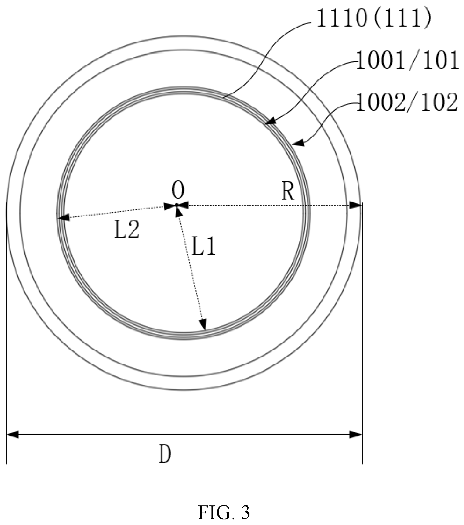

As shown in FIG. 1 and FIG. 3, the bottom plate 10 has a center point O, and the bottom plate 10 is provided with an explosion-proof score 111. The explosion-proof score 111 has an inner edge 101 closest to the center point O and an outer edge 102 farthest from the center point O. The explosion-proof score 111 may have several edges, and in all edges, a distance between the inner edge 101 and the central point O is minimum, and a distance between the outer edge 102 and the central point O is maximum.

The distance L1 between the inner edge 101 and the center point O is greater than or equal to 1/2 of a radius R of the bottom plate 10, and the distance L2 between the outer edge 102 and the center point O is less than or equal to 4/5 of the radius R of the bottom plate 10.

By the above-mentioned arrangement, the explosion-proof score 111 is provided at a position of at least 1/2 of the radius from the center point O, so that it is possible to avoid the problem that the explosion-proof score 111 is too close to the center point O to cause heat generated by welding the bottom plate 10 during the welding process to affect a strength of a material at a position provided with the explosion-proof score 111, and further to lead the explosion-proof score 111 to be easily ruptured in advance. In addition, the explosion-proof score 111 is provided in an area from the center point of 4/5 of the radius, so that it avoids the problem that the explosion-proof score 111 is ruptured due to a large collision on edges of the bottom plate 10 during the strength and safety test to the battery in subsequence. Therefore, the battery case provided in the present application can ensure stability of the explosion-proof score 111, and further ensure stability of the battery in use.

In some examples, a ratio of the distance L1 between the inner edge 101 and the center point O to the radius R of the bottom plate 10 may be greater than or equal to 1/2, and less than or equal to 13/20. That is, 1/2≤L1/R≤13/20. For example, the ratio may be 1/2, 3/5, 4/7, 5/8, 5/9, and 13/20, or the like.

In some examples, a ratio of the distance L2 between the outer edge 102 and the center point O to the radius R of the bottom plate 10 may be greater than 13/20, and less than or equal to 4/5. That is, 13/20<L2/R≤4/5. For example, the ratio may be 2/3, 3/4, 4/5, 5/7, 7/9, or the like, and which is not exemplified here.

In some embodiments, the distance L1 between the inner edge 101 and the center point O is greater than or equal to 3/5 of the radius R of the bottom plate 10, and the distance L2 between the outer edge 102 and the center point O is less than or equal to 7/10 of the radius R of the bottom plate 10.

In this case, the position provided with the explosion-proof score 111 is far from the edge of the bottom plate 10, so that it avoids the problem that the explosion-proof score 111 is ruptured due to the large collision on edges of the bottom plate 10 during the strength and safety test to the battery. At the same time, the position provided with the explosion-proof score 111 is far from the center point O, it avoids the problem that the heat generated by welding the bottom plate 10 during the welding process affects the strength of the material at the position provided with the explosion-proof score 111, and further to lead the explosion-proof score 111 to be easily ruptured in advance.

In some embodiments, as shown in FIG. 3, the explosion-proof score 111 includes one explosion-proof sub-score 1110, an inner sub-edge 1001 of the explosion-proof sub-score 1110 closest to the center point O is provided as the above inner edge 101, and an outer sub-edge 1002 of the explosion-proof sub-score 1110 farthest from the center point O provided as the above outer edge 102.

In some examples, the explosion-proof sub-score 1110 may be located on a side of the center point O and have a non-closed shape, such as a "-" shape or other shapes. In case that the explosion-proof sub-score 110 has the "-" shape, and extends towards the center point, the edges of the ends of the explosion-proof sub-score 1110 in the extension direction are used as the above inner edge 101 and the above outer edge 102, respectively.

In other examples, the explosion-proof sub-score 1110 may surround the center point O and has a closed shape, such as, a square shape, a circle shape, an oval shape, a heart shape, or the like. In case that the explosion-proof sub-score 1110 has the circle shape and a center of the circle shape of the explosion-proof sub-score 1110 coincides with the center point O, the edges of the explosion-proof sub-score 1110 on opposite sides serve as above the inner edge 101 and the above outer edge 102, respectively. In case that the explosion-proof sub-indentation 110 is in a closed shape around the center point O, the continuity of the explosion-proof indentation 111 is ensured. As such, in case that the pressure in the battery case is too high, the explosion-proof score 111 can be uniformly ruptured, to achieve a smooth pressure relief for the battery.

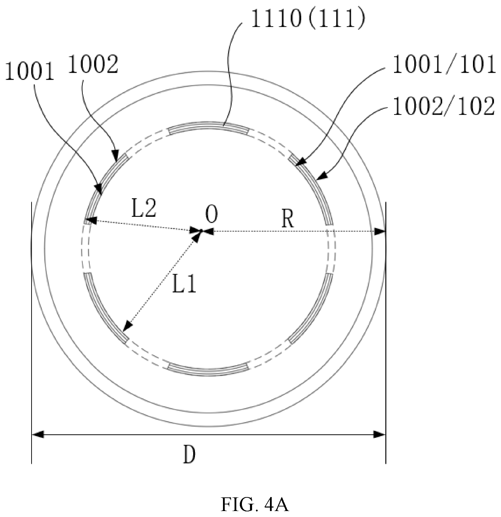

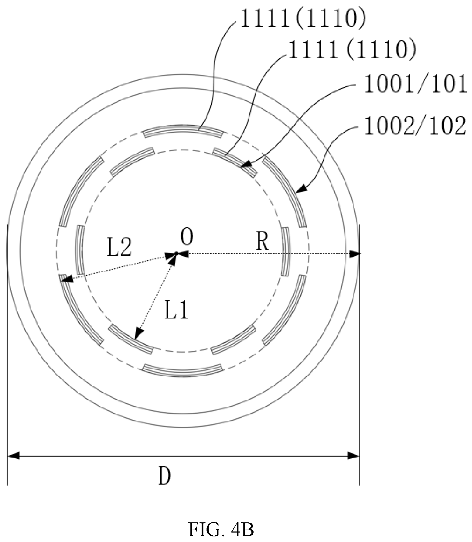

In other embodiments, as shown in FIG. 4A and FIG. 4B, the explosion-proof score 111 includes a plurality of explosion-proof sub-scores 1110 spaced apart from each other. That is, any one of explosion-proof sub-scores 1110 is not continuous from another one. Each explosion-proof sub-score 1110 has an inner sub-edge 1001 closest to the center point O and an outer sub-edge 1002 farthest from the center point O. The inner sub-edge 1001 closest to the center point O among the plurality of inner sub-edges 1001 serves as the inner edge 101, and the outer sub-edge 1002 farthest from the center point O among the plurality of outer sub-edges 1002 serves as the outer edge 102.

In some examples, the plurality of explosion-proof sub-scores 1110 is disposed around the center point O. In this way, it is possible to arrange the plurality of explosion-proof sub-scores 1110 relatively uniform, advantageously to make the explosion-proof sub-scores 1110 rupture together, thereby ensuring the stability of the explosion-proof sub-scores 111 in use.

In some examples, for all explosion-proof sub-scores 1110, at least a part of the explosion-proof sub-scores 1110 is arranged in an annular array, which advantageously improves an uniform arrangement of the explosion-proof sub-scores 1110, to facilitate to rupture this part of the explosion-proof sub-scores 1110 together, and to ensure the stability of the explosion-proof sub-scores 111 in use.

Illustratively, as shown in FIG. 4A, all explosion-proof sub-scores 1110 are arranged in an annular array. In this case, the inner sub-edge 1001 of any one of the explosion-proof sub-scores 1110 can sever as the inner edge 101, and the outer sub-edge 1002 of any one of the explosion-proof sub-scores 1110 can sever as the outer edge 102.

Further illustratively, as shown in FIG. 4B, a part of the explosion-proof sub-scores 1110 is arranged in an annular array, and another part of the explosion-proof sub-scores 1110 is located outside this part of the explosion-proof sub-scores 1110 as mentioned above relative to the center point O, and this another part of the explosion-proof sub-scores 1110 is also arranged in an annular array. That is, the above two parts of explosion-proof sub-scores 1110 are both around the center point O and located at different rings. In this case, the inner sub-edge 1001 of the explosion-proof sub-score 1110 closer to the center point O can serve as the inner edge 101, while the outer sub-edge 1002 of the explosion-proof sub-score 1110 farther from the center point O can serve as the outer edge 102.

In some examples, the plurality of explosion-proof sub-scores 1110 may also be spaced apart in a direction away from the center point O.

In some examples, a width of the explosion-proof sub-score 1110 may be 1 mm. A width direction of the explosion-proof sub-score 1110 is perpendicular to an extension direction of the explosion-proof sub-score 1110. In the case where the explosion-proof score 111 includes one explosion-proof sub-score 1110, the width of the explosion-proof sub-score 1110 is the width of the explosion-proof score 111.

A position of the explosion-proof score 111 and a pressure (this is, a pressure inside the battery case when the explosion-proof score 111 is ruptured) for opening valve are measured, where a thickness of the enclosure plate 20 is 0.4 mm, a thickness of the bottom plate 10 is 0.6 mm, a distance between a groove bottom of the explosion-proof score 111 and the other surface of the bottom plate 10 is 0.1 mm, a width of the explosion-proof score 111 is 1 mm, and a diameter of the bottom plate 10 is 26mm. Based on different distances between the inner edge 101 of the explosion-proof score 111 and the central point O, the data in Table 1 and Table 2 are obtained.

### [Table 1_sm_0001]

**Table 1**

| Distance between inner edge and center point | 4.5mm | 6mm | 6.5mm | 7.5mm | 9mm |
|---|---|---|---|---|---|
| Experiment 1 | 1.611Mpa | 1.853Mpa | 1.867Mpa | 1.957Mpa | 1.875Mpa |
| Experiment 2 | 1.592Mpa | 1.76Mpa | 1.858Mpa | 1.886Mpa | 1.895Mpa |
| Experiment 3 | 1.69Mpa | 1.937Mpa | 1.934Mpa | 1.866Mpa | 1.827Mpa |
| Experiment 4 | 1.527Mpa | 1.852Mpa | 1.886Mpa | 1.884Mpa | 2.013Mpa |
| Experiment 5 | 1.62Mpa | 1.695Mpa | 1.893Mpa | 1.864Mpa | 1.851Mpa |
| Average value | 1.608Mpa | 1.81Mpa | 1.887Mpa | 1.891Mpa | 1.892Mpa |

As can be seen from the data in Table 1, when the distance L1 between the inner edge 101 of the explosion-proof score 111 and the center point O is increased from 4.5mm to 6.5mm (this is, the ratio of the distance L1 to the radius R of the bottom plate 10 is increased from 9/26 to 1/2), the pressure for opening valve is increased by a large amount. This shows that with the inner edge 101 of the explosion-proof score 111 being disposed in this range, the heat generated by welding the bottom plate 10 during the welding process has great effect on the explosion-proof score 111, and therefore the pressure for opening valve varies greatly.

When the distance L1 between the inner edge 101 and the center point O is increased from 6.5mm to 9 mm (this is, the ratio of the distance L1 to the radius R of the bottom plate 10 is increased from 1/2 to 9/13), the pressure for opening valve tends to vary flatly. This shows that with the inner edge 101 of the explosion-proof score 111 being disposed in this range, the heat generated by welding the bottom plate 10 during the welding process has little effect on the explosion-proof score 111, and therefore the pressure for opening valve varies sightly.

### [Table 1_sm_0002]

**Table 2**

| Distance between outer edge and center point | 6.5mm | 7.5mm | 9mm | 10.4mm | 11.5mm |
|---|---|---|---|---|---|
| Experiment 1 | 1.791Mpa | 1.983Mpa | 1.931Mpa | 2.02Mpa | 1.701Mpa |
| Experiment 2 | 1.893Mpa | 1.868Mpa | 1.857Mpa | 1.834Mpa | 1.547Mpa |
| Experiment 3 | 1.797Mpa | 1.811Mpa | 1.988Mpa | 1.843Mpa | 1.612Mpa |
| Experiment 4 | 1.902Mpa | 1.896Mpa | 1.807Mpa | 1.84Mpa | 1.599Mpa |
| Experiment 5 | 2.025Mpa | 1.938Mpa | 1.895Mpa | 1.966Mpa | 1.568Mpa |
| Average value | 1.887Mpa | 1.899Mpa | 1.895Mpa | 1.901Mpa | 1.605Mpa |

As can be seen from the data in Table 2, when the distance L2 between the outer edge 102 of the explosion-proof score 111 and the center point O is increased from 6.5mm to 10.4mm (this is, the ratio of the distance L2 to the radius R of the bottom plate 10 is increased from 1/2 to 4/5), the pressure for opening valve tends to vary flatly. This shows that with the outer edge 102 of the explosion-proof score 111 being disposed in this range, the impact to the edge of the bottom plate 10 during the subsequent strength and safety test has less effect on the explosion-proof score 111, and therefore the pressure for opening valve varies sightly.

When the distance L2 between the outer edge 102 and the center point O is increased from 10.4mm to 11.5mm (this is, the ratio of the distance L1 to the radius R of the bottom plate 10 is increased from 4/5 to 23/26), the pressure for opening valve is decreased by a large amount. This shows that with the outer edge 102 of the explosion-proof score 111 being disposed in this range, the impact to the edge of the bottom plate 10 during the subsequent strength and safety test has greater effect on the explosion-proof score 111, and therefore the pressure for opening valve varies greatly.

Therefore, when the distance L1 between the inner edge 101 and the center point O is greater than or equal to 1/2 of the radius R of the bottom plate 10, and the distance L2 between the outer edge 102 and the center point O is less than or equal to 4/5 of the radius R of the bottom plate 10, the explosion-proof score 111 has a relatively stable pressure for opening valve, thereby facilitating to ensure the stability of the battery in use.

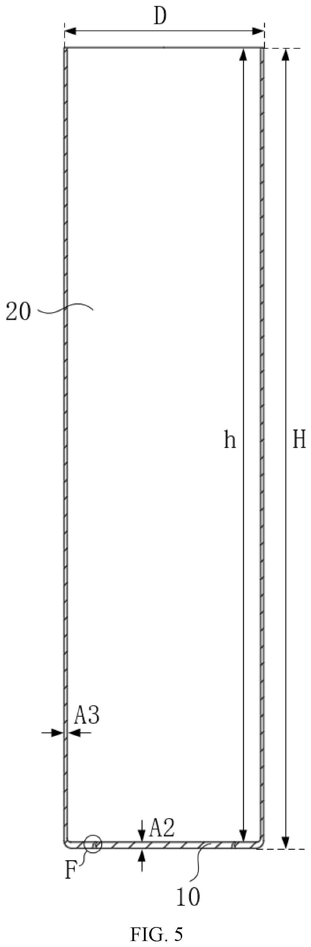

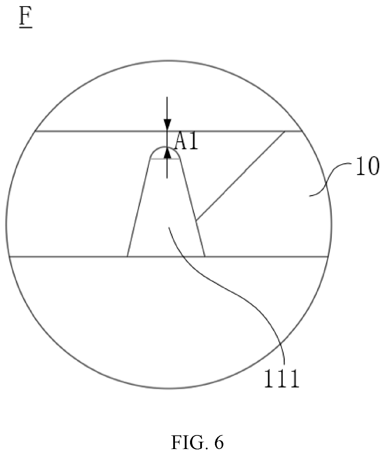

In some embodiments, as shown in FIG. 5 and FIG. 6, the explosion-proof score 111 is located on a side surface of the bottom plate 10, and the explosion-proof score 111 has a groove bottom. The distance A1 between the groove bottom and the other side surface of the bottom plate 10 is greater than or equal to 0.03mm and less than or equal to 0.2 mm.

In this way, it is facilitated to rupture at the position where the explosion-proof score 111 is provided, to exhaust gas and relieve pressure smoothly.

Illustratively, the battery generally has a relief pressure between 1.2Mpa and 2.5Mpa, and with the distance A1 being set in the above-mentioned range, it is facilitated to relieve pressure in the above-mentioned relief pressure range. For example, when the distance A1 is equal to 0.03mm, the relief pressure of the battery corresponds approximately to 1.2Mpa. That is, when the pressure inside the battery is greater than or equal to 1.2Mpa, the explosion-proof score 111 is ruptured for pressure relief. When the distance A1 is equal to 0.2 mm, the relief pressure of the battery corresponds approximately to 2.5Mpa. That is, when the pressure inside the battery is greater than or equal to 2.5Mpa, the explosion-proof score 111 is ruptured for pressure relief. Therefore, the battery case of the present application can set a reasonable distance A1 according to the actual requirement on relief pressure, so as to realize stable pressure relief.

In some embodiments, the explosion-proof score 111 is located on the side of the bottom plate 10 close to the enclosure plate 20. With this arrangement, the explosion-proof score 111 is located inside the battery, which helps to improve the overall aesthetic appearance of the battery and also helps to prevent the explosion-proof score 111 from easily containing foreign matters and affecting the working performance during usage of the battery.

In some embodiments, as shown in FIG. 5 and FIG. 6, the explosion-proof score 111 is located on the side of the bottom plate 10 away from the enclosure plate 20. With this arrangement, the explosion-proof score 111 is located outside the battery, which provides sufficient space to manufacture the explosion-proof score 111, thereby improving the manufacture efficiency of the battery case.

In some embodiments, as shown in FIG. 5, a ratio of the diameter D of the bottom plate 10 to a sum of a height h of the enclosure plate 20 and the thickness A2 of the bottom plate 10 is greater than or equal to 0.2 and less than or equal to 0.4. That is, 0.2≤D/(h+A2) ≤0.4. The sum of the height h of the enclosure plate 20 and the thickness A2 of the bottom plate 10 is the height H of the battery case 100, in this case, 0.2≤D/H≤0.4.

The diameter D of the bottom plate 10 is adapted to the diameter of the core in the receiving chamber. The greater the diameter of the core, the greater the energy density thereof, and the greater the heat generated in its operation. Furthermore, the higher the height H of the battery case 100, the greater area for heat dissipation thereof. Therefore, setting the ratio of the diameter D of the bottom plate 10 to the height H of the battery case 100 within the above-mentioned ratio range advantageously ensures a good balance between the energy density of the battery and the heat dissipation, thereby providing the battery with good working performance.

In some examples, the ratio of the diameter D of the bottom plate 10 to the height H of the battery case 100 may be 0.2, 0.25, 0.3, 0.35, 0.4, or the like, which is not limited herein.

In some embodiments, as shown in FIG. 5, the ratio of the thickness A2 of the bottom plate 10 to the thickness A3 of the enclosure plate 20 is greater than or equal to 1 and less than or equal to 2. That is, 1≤A2/A3≤2.

With this arrangement, it is possible to ensure that the bottom plate 10 has a relatively greater thickness, on one hand, to facilitate the manufacture of the explosion-proof score 111, and on the other hand, to ensure that the bottom plate 10 as a whole has a good strength to avoid damage caused by the manufacture of the explosion-proof score during the strength and safety test on the battery.

In some examples, the ratio of the thickness A2 of the bottom plate 10 to the thickness A3 of the enclosure plate 20 may be 1, 1.2, 1.4, 1.6, 1.8, 2, or the like, which is not limited herein.

In some embodiments, the bottom plate 10 and the enclosure plate 20 have same materials. This advantageously improves the consistency and stability of the battery case 100 to bear thermal expansion and contraction of the core inside under a certain strength, thereby ensuring the use stability of the battery.

In some examples, the material of the bottom plate 10 and the enclosure plate 20 may be aluminum or steel.

Illustratively, A1 3003, A1 3004, nickel-plated SPCC steel, or stainless steel may be used for the materials of the bottom plate 10 and the enclosure plate 20. By using the above-mentioned materials, the battery case 100 can be made to have quite strength, corrosion resistance, and processability, thus facilitating the manufacture for the battery in subsequence.

In some embodiments, the bottom plate 10 and the enclosure plate 20 are integrally formed. On one hand, the stable connection between the bottom plate 10 and the enclosure plate 20 can be improved, thereby ensuring the overall strength of the battery case 100, and on the other hand, the sealing performance on the battery case 100 can be improved, thereby ensuring the stability of the core in work.

In specific manufacture for the above battery case 100, the method for manufacturing the battery case 100 may include the following steps:
S10: conveying a metal tape reel to a cup punching station, extruding and deforming the metal tape reel by a die at the cup punching station, and then cutting off to form a cup-shaped initial material.
S20: conveying the cup-shaped initial material to a stretching station and continuously stretching the cup-shaped initial material by an upper die and a lower die to form the cup-shaped initial material as a shell blank of a predetermined size.
S30: conveying the shell blank to a scribing station, and scribing an explosion-proof score on a side of the bottom plate close to the enclosure plate or on a side of the bottom plate away from the enclosure plate by extruding the shell blank through an upper die and a lower die, and to form the shell blank into a quasi shell.
S40: conveying the quasi shell to a flattening station, and flattening the bottom plate is flattened by extruding the quasi shell through an upper die and a lower die, which ensures that a product formed by the quasi shell is uniform and flat in size; and
S50: conveying the quasi shell processed after step S40 to a cutting station, and cutting a mouth of the quasi shell to form a flat opening.

With the above-described manufacturing method, the bottom plate 10 and the enclosure plate 20 are integrally formed, and the manufacture for the explosion-proof score can be realized, to improve the manufacture efficiency of the battery case 100.

Based on the above concepts, some embodiments of the present application also provide a battery including the battery case 100 described in any one of the above embodiments.

Since the battery case 100 is provided, the battery has the technical effect of the battery case 100 described above, and details are not described herein.

In some embodiments, the battery further includes a core in the battery case 100.

In some examples, the core may include a positive piece, a negative piece, a diaphragm, a tab, and the like.

For example, the core may be a core formed by winding, referred to as a wound core. In the manufacture, the positive piece, the diaphragm, and the negative piece are stacked in sequence, and then wound together to form the wound core.

For another example, the core may also be a laminated core or other electrode core known to those skilled in the art, which is not limited by the present application.

Based on the above concept, some embodiments of the present application further provide a battery pack including the battery described in any one of the above embodiments.

Since the battery has the battery case 100, the battery pack has the technical effect of the battery case 100 described above, and details are not described herein.

## Claims

1. A battery case, comprising:
a bottom plate; and
an enclosure plate disposed around the bottom plate;
wherein the enclosure plate and the bottom plate together define a receiving chamber with an opening, and the opening is disposed opposite to the bottom plate; wherein the bottom plate has a center point and an explosion-proof score, the explosion-proof score has an inner edge closest to the center point and an outer edge farthest from the center point, a distance between the inner edge and the center point is greater than or equal to 1/2 of a radius of the bottom plate, and a distance between the outer edge and the center point is less than or equal to 4/5 of the radius of the bottom plate.

2. The battery case according to claim 1, wherein the explosion-proof score comprises one explosion-proof sub-score, an inner sub-edge of the explosion-proof sub-score closest to the center point serves as the inner edge, and an outer sub-edge of the explosion-proof sub-score farthest from the center point serves as the outer edge; or,
wherein the explosion-proof score comprises a plurality of explosion-proof sub-scores space apart from each other, each of the plurality of explosion-proof sub-scores has an inner sub-edge closest to the center point and an outer sub-edge farthest from the center point, the inner sub-edge closest to the center point among a plurality of the inner sub-edges serves as the inner edge, and the outer sub-edge farthest from the center point among a plurality of the outer sub-edges serves as the outer edge.

3. The battery case according to claim 2, wherein in case that the explosion-proof score comprises a plurality of explosion-proof sub-scores spaced apart from each other, the plurality of explosion-proof sub-scores is disposed around the center point.

4. The battery case according to claim 1, wherein the explosion-proof score is located on a side surface of the bottom plate, the explosion-proof score has a groove bottom, and a distance between the groove bottom and another side surface of the bottom plate is greater than or equal to 0.03mm and less than or equal to 0.2 mm.

5. The battery case according to claim 4, wherein the explosion-proof score is located on a side of the bottom plate close to the enclosure plate, or the explosion-proof score is located on a side of the bottom plate away from the enclosure plate.

6. The battery case according to any one of claims 1 to 5, wherein a ratio of a diameter of the bottom plate to a sum of a height of the enclosure plate and a thickness of the bottom plate is greater than or equal to 0.2 and less than or equal to 0.4.

7. The battery case according to any one of claims 1 to 5, wherein a ratio of a thickness of the bottom plate to a thickness of the enclosure plate is greater than or equal to 1 and less than or equal to 2.

8. The battery case according to any one of claims 1 to 5, wherein the bottom plate and the enclosure plate have same materials.

9. A battery, comprising the battery case according to any one of claims 1 to 8.

10. A battery pack, comprising the battery according to claim 9.
